# EUROPEAN PATENT APPLICATION

(11) **EP 1 533 705 A1**
(43) Date of publication of application: **25.05.2005**
(21) Application number: 03702286.0
(22) Date of filing: 13.01.2003
(51) Int. Cl.: G06F 12/14

(54) **SEMICONDUCTOR STORAGE METHOD AND APPARATUS FOR IMPLEMENTING INFORMATION PROMPT**

(30) Priority: 30.06.2002 CN 02134290
(71) Applicant: Shenzhen Netac Technology Co., Ltd., Guangdong 518057 (CN)
(72) Inventor: DENG, G., China Academy of Science & Tech. Dev., Shenzhen, Guangdong 518057 (CN); CHENG, Xiaohua, Tongzhou District, Beijing 101101 (CN); XIANG, Feng, Futian, Shenzhen, Guangdong 518026 (CN)
(74) Representative: Ebner von Eschenbach, Jennifer
(86) International application number: PCT/CN2003/000021
(87) International publication number: WO 2004/003754

(57) **Abstract**

The invention relates to a digital data processing, and more particularly to a method for realizing information prompt semiconductor storage. It comprises the steps of setting up a semiconductor storage apparatus, which uses a semiconductor storage medium module to control a controller module and an interface module of the semiconductor storage apparatus; providing an information prompt module in the semiconductor storage apparatus; the information prompt module (5) acquiring the information from the outside of the semiconductor storage apparatus and/or the apparatus itself; and the information prompt module prompting the acquired information. The present invention has the following advantages in comparison with the prior art. The legitimate holder can be identified without knowing the content of the stored data, and there is no confusion among semiconductor storage apparatuses of different users. The information in the semiconductor storage apparatus can be known even without connection with a data processing system so that there is no confusion for the user having several semiconductor storage apparatuses.

## Description

### TECHNICAL FIELD

The present invention relates to digital data processing, and more particularly to a method for realizing information prompt semiconductor storage and an apparatus thereof.

### BACKGROUND ART

With the rapid development of computer technique, the requirement for data storage and apparatus thereof, especially for the removable storage, is much higher. The conventional removable storage devices, such as floppy disks, are gradually eliminated due to their small capacity, slow speed, requirement of a driver, easy to be damaged, poor reliability, etc. The development of semiconductor storage technology starts a new era in the field of removable data storage. Chinese Patent No. ZL99117225.6, entitled "A flash electronically external storage method for the data processing system and an apparatus thereof', discloses an external apparatus using the flash memory as the storage medium. The semiconductor removable storage apparatus based on this patented technology is widely accepted by users because of the advantages of its smaller size, large capacity, high speed access, portability, stability of performance, durability, non-necessity of driver, instant plug-and-play, and convenience to be used as storage device in the computer, and its application becomes more and more broad. Nonetheless, while the semiconductor removable storage apparatus are used widely, thereby gradually replacing floppy disks, there are several disadvantages in such apparatus. 1) It lacks of identification or authentication of legitimate holder, and thus it is difficult to identify the legitimate holder of the semiconductor storage apparatuses when the products are about the same, and have the same or similar appearance. Sometimes, the legitimate holder cannot be identified until the storage data content is revealed. Although the information of the legitimate holder and other things can be indicated by way of a tag or sign stuck on the case of the semiconductor removable storage apparatus, the tag or sign is likely to be damaged, and it affects the appearance of the apparatus as well. In the working group, such identical or similar profile may easily cause misuse with each other, damage or loss of the apparatus. Therefore, it not only causes the reduction of work efficiency, but also likely cause the irreparable loss, such as, leakage of technical know-how, trade secret, scope of authorization and responsibility, personal privacy or other information. 2) In use, it is not clear as to the state of reading and/or writing of the semiconductor storage apparatus. The operational state of the present semiconductor storage apparatus is generally indicated by an indication device, that is, typically LED. Such an indication device can show only roughly the operational state of the semiconductor storage apparatus. For instance, LED is blinking when the data is read or written. However, the user does not know whether the semiconductor storage apparatus is reading or writing the data. The response of such read-write indication of the data delays significantly. 3) The information in the semiconductor storage apparatus cannot be known instantaneously, and it can only become known through the operation of a host after the apparatus is connected with a data processing system. It is very inconvenient for the users having several semiconductor storage apparatuses because the respective semiconductor storage apparatus are difficult to be distinguished from one another and it may cause confusion sometimes.

### SUMMARY OF THE INVENTION

An object of the present invention is to provide a method for realizing information prompt in semiconductor storage and an apparatus thereof to overcome the aforesaid defects in the prior art.

Another object of the present invention is to provide a method for realizing information prompt in semiconductor storage through the following technical solution, comprising:
A. setting up a semiconductor storage apparatus, which uses a semiconductor storage medium module to control a controller module and an interface module of the semiconductor storage apparatus;
B. providing an information prompt module in the semiconductor storage apparatus;
C. the information prompt module acquiring the information from the outside of the semiconductor storage apparatus and/or from the apparatus itself; and
D. the information prompt module prompting the acquired information.

The object of the present invention can also be realized by the following technical solution of providing and using a semiconductor storage apparatus for realizing the information prompt, which comprises an information prompt module in addition to the controller module, the interface module and the semiconductor storage medium module, that are connected electrically with the controller module respectively. The information prompt module comprises a display component, an acoustic generating component and/or a vibration component. The aforesaid respective modules may be present individually or combined to one or several modules. The semiconductor apparatus can be removable, fixed or in any other states.

The semiconductor storage apparatus for realizing the information prompt according to the present invention has the following advantages in comparison with the prior art. The legitimate holder can be identified without knowing the actual contents of the stored data, and there is no confusion among semiconductor storage apparatus of different users. The information in the semiconductor storage apparatus can be readily known even without connection with a data processing system such that there is no confusion for the user having several semiconductor storage apparatuses, and the read and/or write state can be indicated clearly.

### BRIEF DESCRIPTION OF THE DRAWINGS

FIG.1 is a functional module diagram of the method for realizing the information prompt in semiconductor storage and an apparatus thereof according to the present invention;
FIG.2 is a storage space distribution diagram of the prompt information storage area according to the present invention;
FIG.3 is a block diagram of the power supply module 4 according to the present invention;
FIG. 4-1 and FIG. 4-2 are flow charts of the software for setting up the prompt information store area according to the present invention;
FIG. 5-1 and FIG.5-2 are schematic flow charts of the firmware according to the present invention;
FIG. 6 is a block diagram of the hardware function using USB and the liquid crystal display (LCD) as the means of the information prompt according to the present invention;
FIG. 7 is a profile diagram using the liquid crystal display (LCD) as the embodiment of information prompt according to the present invention;
FIG. 8 is a schematic circuit diagram of the controller module 1 according to the invention;

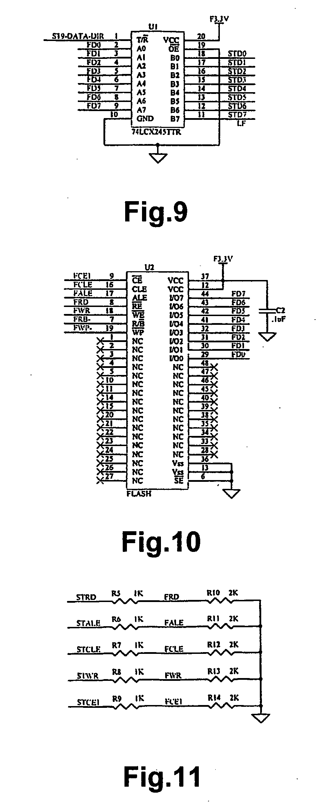

FIG. 9 is a circuit diagram of the circuit of bidirectional level conversion of the data line between the controller module 1 and the semiconductor storage medium according to the invention;
FIG.10 is a schematic circuit diagram of the storage medium module 3 according to the invention;
FIG. 11 is a circuit diagram of the unidirectional level conversion circuit of the data line between the controller module 1 and the semiconductor storage medium according to the invention;
FIG. 12 is a schematic circuit diagram of the power source module 4 according to the invention;
FIG. 13 is the schematic diagram of the circuit connection between the liquid crystal display (LCD) component and the controller module 1 according to the present invention; and
FIG. 14 is the structural diagram of the battery module of an embodiment of the semiconductor storage apparatus according to the present invention.

### DETAIL DESCRIPTION OF PREFERRED EMBODIMENTS

The preferable embodiment will be further described in respect of the accompanying drawings.

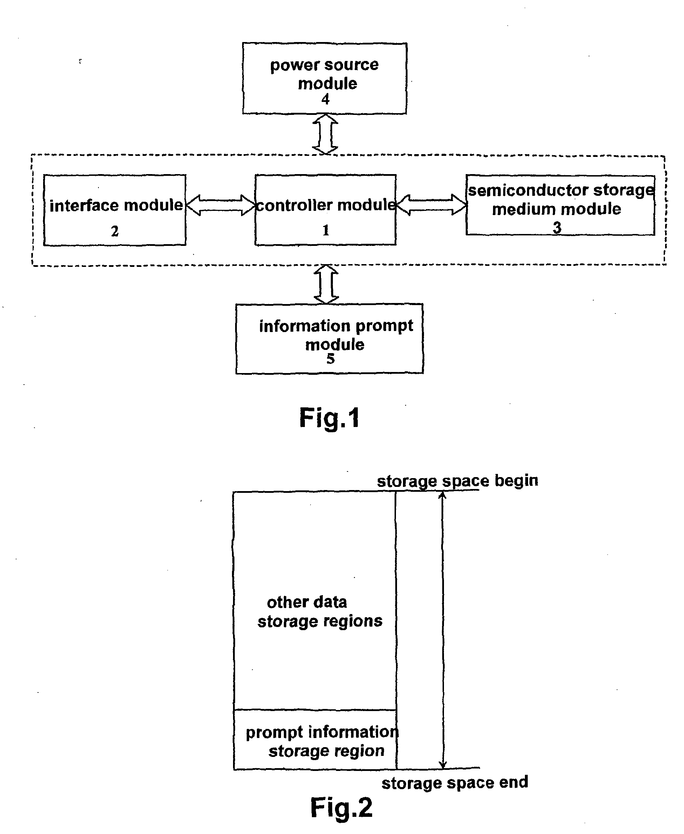

A method for realizing information prompt in semiconductor storage, as shown in Fig. 1, comprises the steps of:
A. setting up a semiconductor storage apparatus, which uses a semiconductor storage medium module 3 to control a controller module 1 and an interface module 2 of the semiconductor storage apparatus;
B. providing an information prompt module 5 in the semiconductor storage apparatus;
C. the information prompt module 5 acquiring the information from the outside of the semiconductor storage apparatus and/or from the apparatus itself; and
D. the information prompt module 5 prompting the acquired information.

The "acquisition" herein refers to obtaining the information from the data processing system or from the semiconductor storage apparatus itself actively or passively.

The semiconductor storage medium used in the semiconductor storage medium module of the present invention comprises, but not limited to the Flash Memory, DRAM, EEPROM, SRAM, FRAM, MRAM or Millipede, and it can use one or more semiconductor chips. The Millipede is the technological product of the recent development announced by the IBM researchers, that is, super-density storage technology, which is similar to the punched card of the early computer. This new technology is conceived by two scientists working in the IBM Zurich Research Laboratory, named Millipede. Peter Vettiger, as the leader of this storage research project and concept of the storage technology, said that this idea occurred when he was drinking the beer after a weekly football game of the company. The prototype of the Millipede Laboratory can store data 20 times greater than that of the tape storage medium of the current computer, and data of about 25 million pages of the text in a space of the size equivalent to a stamp. Vettiger predicted that this storage card would begin to replace the flash memory card in the laptop computer and the mobile telephone before 2005. IBM said that a Millipede device could store a million or trillion information in a square inch. It is different from the conventional punched card because this new device is re-writeable, and it means that it can delete the data and rewrite it repeatedly. Vettiger said that it had been tested to be rewritten at least hundreds to thousands times.

The interface module 2 is a universal interface, which can be the wire universal interface or wireless universal interface, such as USB interface, IEEE1394 interface, Bluetooth interface, IrDA infrared interface, HomeRF interface, IEEE802.11a or IEEE802.11b interface, wide area/local area wire network interface and/or wide area/local area wireless network interface, etc. mainly used for connecting with the data processing system.

The information prompt display comprises, but not limited to the liquid crystal display (LCD), light-emitting diode matrix (LED Matrix), Field Emission Display (FED) and/or Organic -Electroluminescence (OEL) to display the characters and/or patterns, and/or the speaker, buzzer and/or crystal acoustic generator as the acoustic prompt, and/or the vibrator as the vibration prompt. The information comprises, but not limited to the static information and/or dynamic information, wherein the static information refers to the users' information, device information and storage content information or a part of the above-mentioned three kinds of information. The static information is further classified as the manufacturer information, the users' names, the users' codes, the users' passwords, the product types, the product serial numbers, the product barcodes, the descriptions of the storage contents, the total storage capacity of the semiconductor storage apparatus, the numbers of the storage media, the storage capacity of each storage medium, and/or the manufacturer of the storage media, and the like. The dynamic information refers to the reading and writing state of the device, the state information of the write protection, the property of the storage disk, the property of the accessed file, the used space, the free space, the temperature, the humidity, the index of noise, the date, the time, and/or the index of air, etc. The means of displaying the character and/or pattern can be the static display and/or dynamic display, etc. The present invention is also provided with a manual control component for realizing the manual control of the information prompt.

The semiconductor storage apparatus is provided with a prompt information storage region to store the prompt information. The prompt information storage region can be provided in the semiconductor medium module 3, the information prompt module 5 and/or the controller module 1. The prompt information storage region can be accessed or be write-protected. The prompt information storage region has an independent or universal encryption/decryption module to encrypt the data stored in the prompt information storage region, and to decrypt the data read from the prompt information storage region. The independent or universal encryption/decryption module can or cannot have the function of masking. The present invention can have the function of write-protection that can be realized by the "hard" protection and/or "soft" protection. The hard protection can be realized by switch devices and the like, and the soft protection can be realized by firmware and/or drivers of semiconductor apparatus. Fig. 2 is a storage space distribution diagram of the prompt information storage region. The prompt information storage region can be completely in the semiconductor storage medium module 3, while the data (in other data storage regions) and the prompt information of the storage disk share the storage space of the semiconductor storage medium.

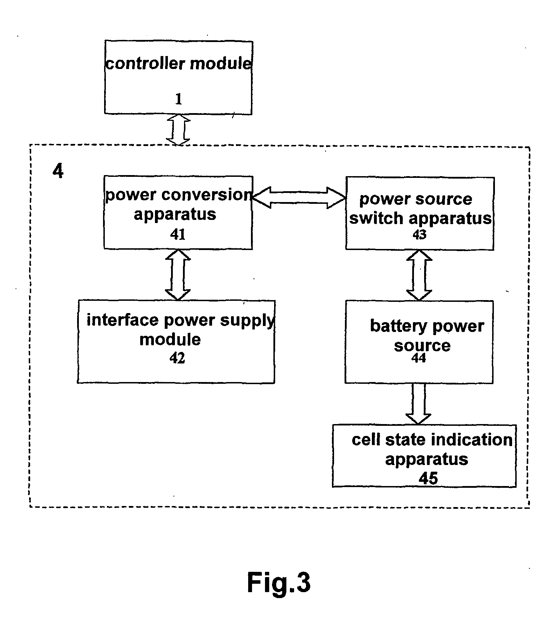

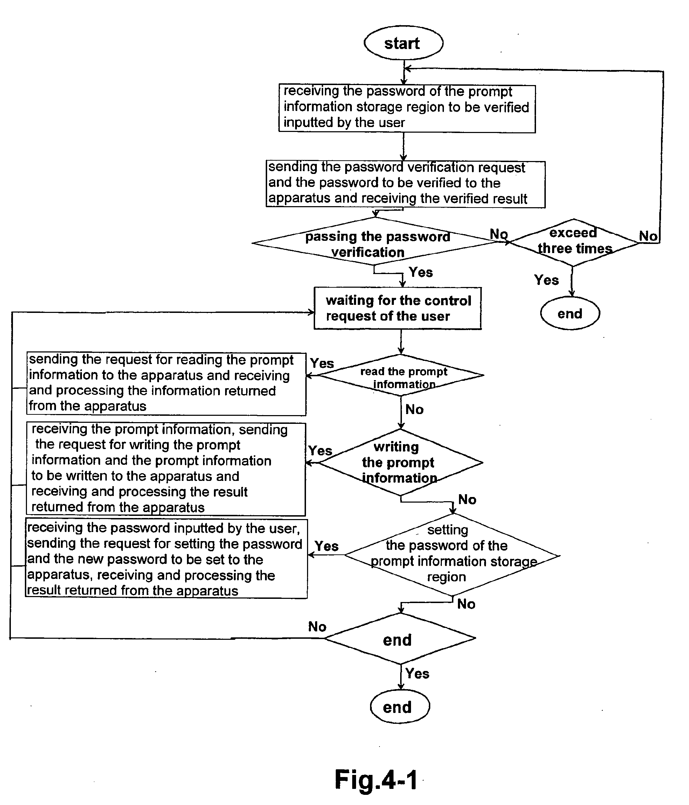

As shown in Fig. 1 and Fig. 3, the power source module 4 is provided in the semiconductor storage apparatus. The power source module 4 obtains the power from the outside and/or the self-contained power source, and is provided with a power control switch when it has the self-contained power source. The self-contained power source is a PV cell, a primary cell and/or a rechargeable cell. The power source module 4 can be provided with a conversion circuit to charge the self-contained rechargeable cell. The prompt information content and the operational mode of the information prompt module 5 can be defined and modified by the software running in the data processing system host.

The software running in the data processing system comprises:
(1) a user identification module, which compares the user identification information with the identification information read from the private information region of the semiconductor storage medium for storing the data and returns the comparison result, wherein if they are matching, the user will have the authority to use the apparatus, and if not, the user will be rejected, and thus the module can support modification of the user's identification information of the identified user, and the modified user's identification information is written into the semiconductor medium storage apparatus;
(2) a program for setting up the prompt information storage region, which supports releasing the setting-up process of the user's identification through the identified user, supports the definition and modification of the operational mode of information prompt module by the user, and supports the definition and the modification of the user's information, and the definition and the modification of the file information, etc.;
(3) an encryption/decryption module, which encrypts the data to be stored into the private information region of the semiconductor storage medium, and decrypts the data read from the private information region of the semiconductor storage medium; and
(4) a device driver module, which connects the host system with the semiconductor storage apparatus with the protocol selected by the universal interface, receives the operational command and the data from the file processing system, and sends them to the semiconductor storage medium apparatus through the universal interface, and which receives the data and the static information returned from the semiconductor storage medium apparatus from the universal interface, and sends them to the file processing system.

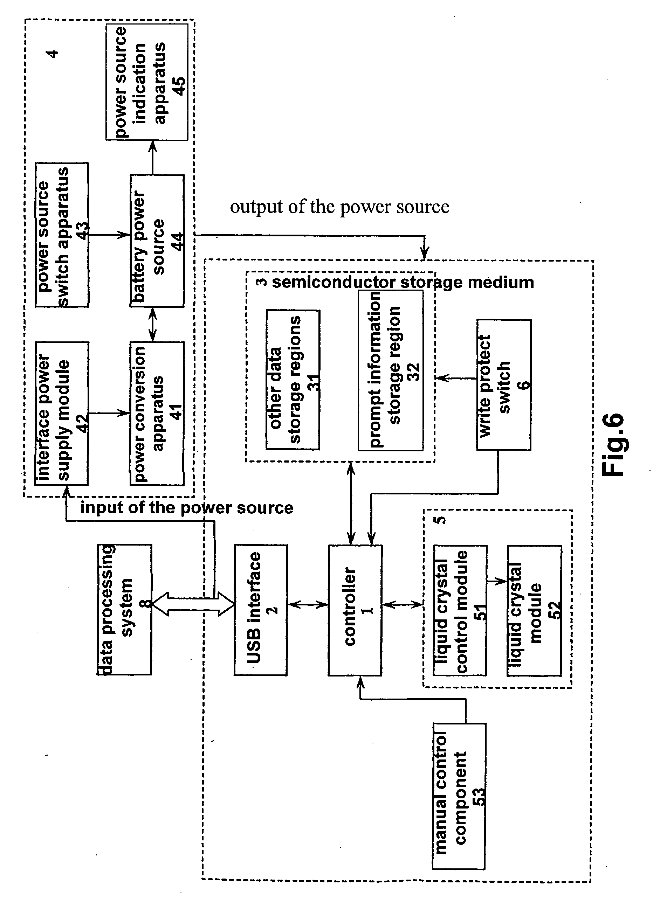

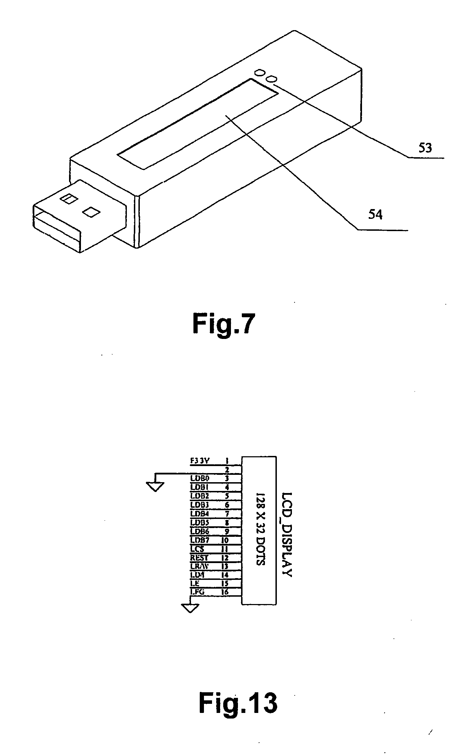

A semiconductor storage apparatus for realizing information prompt, as shown in Fig. 1, comprises an information prompt module 5 in addition to the controller module 1, the interface module 2 and the semiconductor storage medium module 3 connected with the module 1 respectively. The information prompt module 5 comprises at least a display component, an acoustic component and/or a vibration component. The respective modules can be present individually, and can also be combined into one or more modules. As shown in Fig. 6 and Fig. 7, the apparatus of the present invention further comprises a manual control component 53 for setting up the information prompt to realize the manual control of the information prompt. The manual control component 53 comprises, but not limited to a button.

As shown in Fig. 6, the information prompt module 5 comprises a control module 51 and a prompt module 52, wherein the control module 51 controls the operation of the prompt module 52, or the information prompt module 5 only comprises the prompt module 52. The information prompt module 5 connects electrically the control module 1, interface module 2 and/or the semiconductor storage medium module 3. The display component comprises, but not limited to the liquid crystal display (LCD), light-emitting diode matrix (LED Matrix), Field Emission Display (FED) display and/or Organic-Electroluminescence (OEL) display, and the acoustic component comprises, but not limited to a speaker, a buzzer and/or a crystal acoustic generator.

The apparatus of the present invention further comprises a power source module 4, and the module 4 comprises the voltage adapter circuit and/ or self-contained power source. It is provided with the power source control switch when it has a self-contained power source. The self-contained power source comprises, but not limited to a PV cell, primary cell and/or rechargeable cell. The power source module 4 may be provided with a conversion circuit to charge the self-contained rechargeable cell.

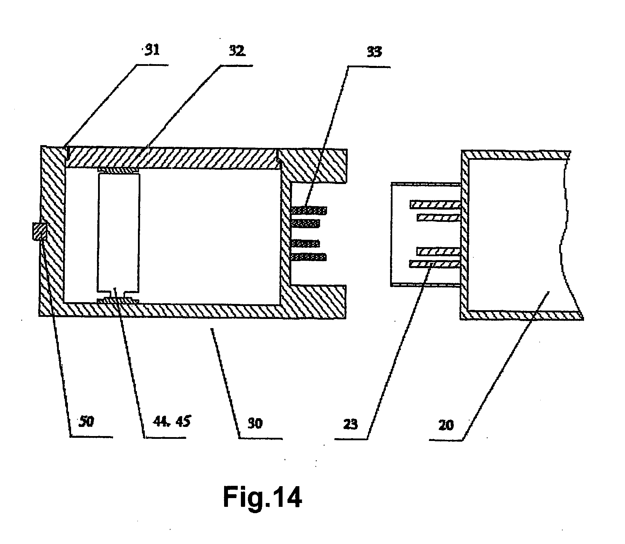

As shown in Fig. 14, the apparatus of the present invention further comprises a battery module 44 that is at least a battery cell 45 and contained in a cap 30 fit on the housing 20. The battery cell 45 is arranged in the cap 30 from its side inlet 31 and has the side cover board 32 to cover and protect the inlet 31. One end of the housing 20 is provided with a USB or IEEE1394 interface 23, and one end of the cap 30 is provided with an interface 33 connected with the interface 23. The switch 50 is connected in serial with the circuit from the battery cell 45 to an interface 33 to cut off or turn on the power supply. The battery module 44 may be a part of the power source module 4. The battery cell in the cap 30 supplies the power to the semiconductor storage apparatus after the cap 30 is covered.

As shown in Fig. 3, the power source module 4 comprises a power conversion apparatus 41, a universal power supply module 42, a power source switch apparatus 43, a battery power source apparatus 44, and a power source state indication apparatus 45. The power source can be supplied not only from the universal interface circuit of the data processing system, but also from the battery power source. When the semiconductor storage apparatus is connected with the data processing system, the universal interface power source of the data processing system supplies power to the semiconductor storage apparatus through the universal interface 2 and the power conversion apparatus 41, and the power source control module 4 of the semiconductor storage apparatus switches automatically to the universal interface power supply mode. The microprocessor in the semiconductor storage apparatus cooperates with the driver to initialize the apparatus, and perform the information prompt simultaneously. When the apparatus is not connected with the data processing system, the user can use the power switch apparatus 43 to provide battery power source supply through or not through the power conversion to operate the information prompt module to realize the function of the information prompt of the present apparatus. The power switch apparatus 43 can be combined with the switch 50. The power source switch apparatus 43, the battery state indication apparatus or the battery source apparatus in the battery control module may not be necessary.

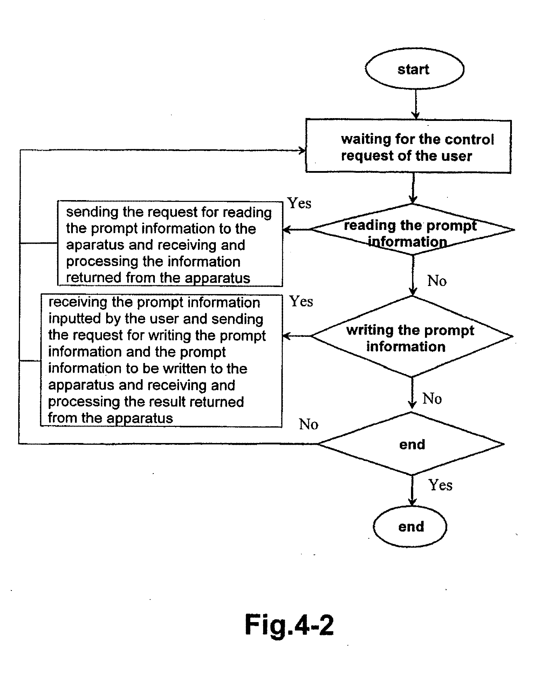

The information content and/or the operational mode of the information prompt module 5 can be defined and modified through the software running in the data processing system host, for instance, the definition or modification of the users' names, the users' codes, the users' passwords, the product types, the product serial numbers, the product barcodes, the description of the storage contents, the description of information of the device and other personal information defined by the user, and can be used to define or modify what the information prompt should display, the sequence for displaying the prompt information, display mode, display format, and the like. The defined or the modified information is written into the information prompt storage region of the semiconductor storage apparatus. The software flow charts are shown in Fig. 4-1 or Fig. 4-2.

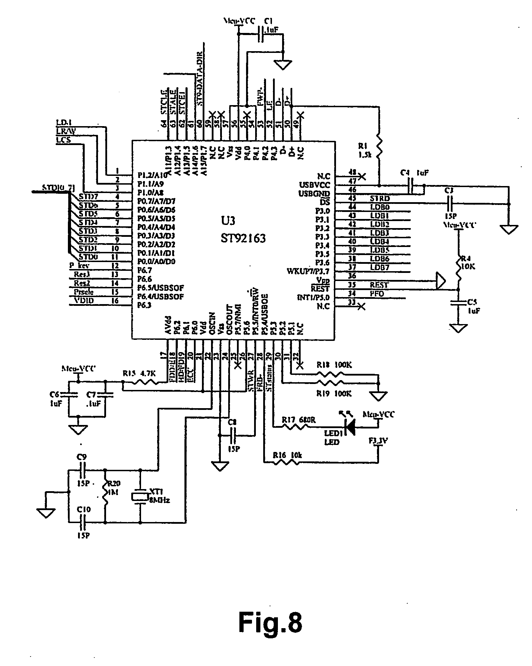

As shown in Fig. 8, the controller module 1 uses a private processor chip U3 that is the microprocessor capable of controlling the USB interface. In this figure, XT1 is an 8MHz crystal oscillator. The firmware is provided in the controller module 1, more particularly, in the processor chip U3. Its main function is to perform the device control, data access, interface control and information prompt and the like of the semiconductor storage apparatus. The firmware is provided with the information prompt control program. This program and the information prompt control module 51 in the information prompt module 5 are used to detect, read, write and control the information content, prompt mode and the like prompted by the information prompt module 5, and to feedback the information of the information prompt module 5 to the data processing system. The information prompt control module 51 in the information prompt module 5 and the controller module 1 may be independent or combined together.

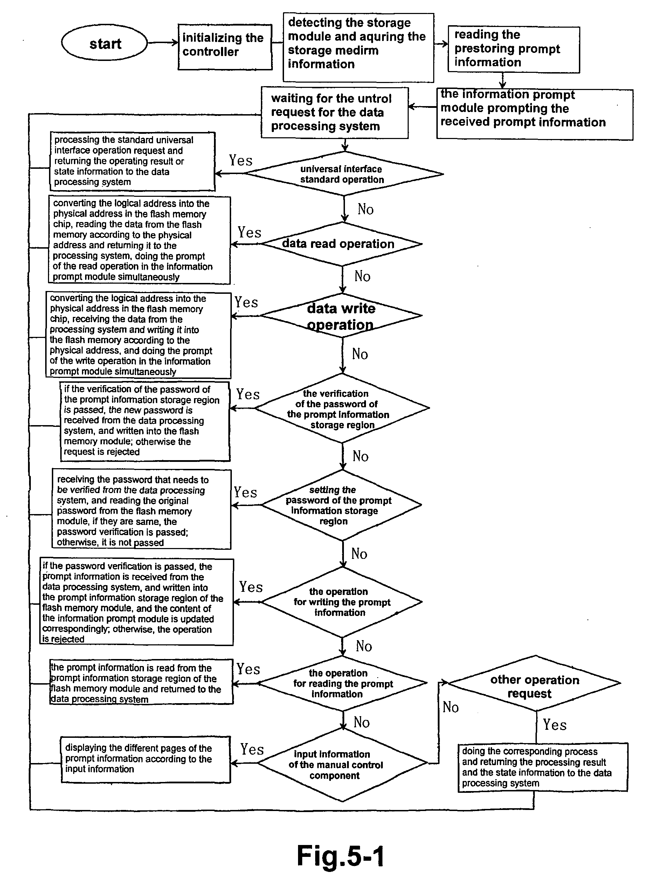

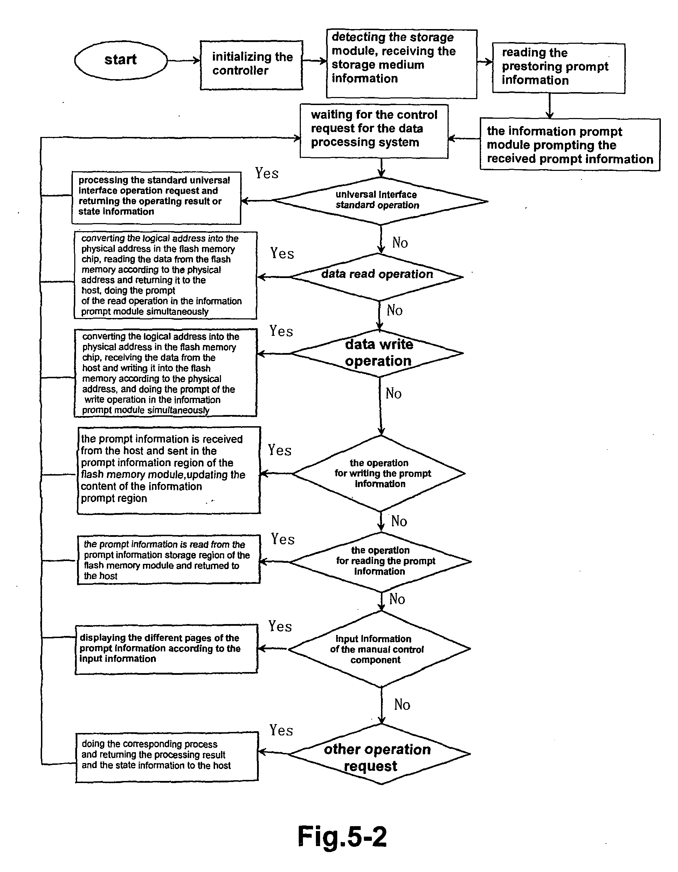

Fig. 5-1 is a flow chart of the firmware with the function of the password protection, and Fig. 5-2 is a flow chart of the firmware without the function of the password protection.

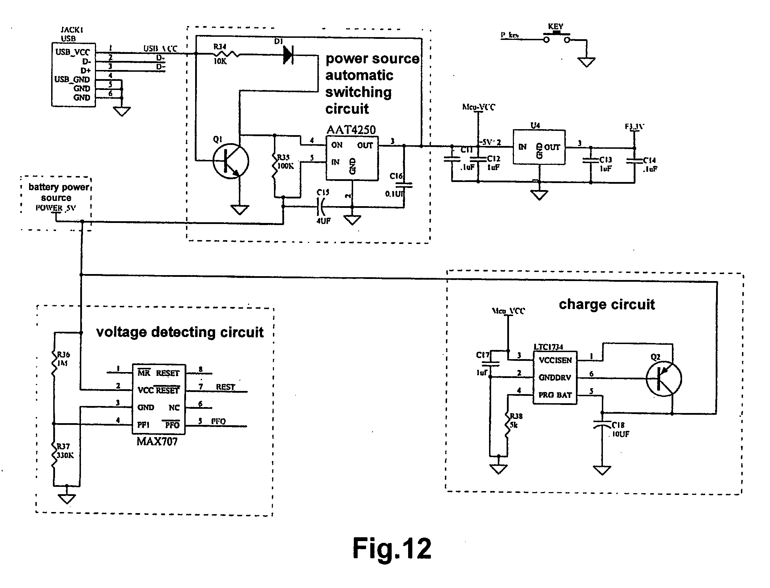

As shown in Fig. 12, the power source module 4 realizes not only the direct-current 5V USBVCC supplied by USB of the data processing system, but also the direct-current POWER-5V supplied by the battery power source 44. When connected with the data processing system, the host power source USBVCC supplies power to the semiconductor storage apparatus through the power source automatic switch circuit composed of R34, D1, Q1, R35, AAT4250 switching to USB interface power source. When the semiconductor storage apparatus is disconnected with the data processing system and the KEY of the power source switch apparatus 43 is turned on, the battery power source POWER_5V supplies power to the semiconductor storage apparatus through the power source automatic switch circuit composed of the above elements switching to the battery power source. The direct-current 5V power source supplied by the above two modes is converted into 3.3V power source through the chip U4 and parallel connected capacitors C11, C12, C13, C14. When the voltage detection circuit of the power source module 4 detects that the battery power source 44 is less than the rated voltage, the charge circuit composed of C17, C18, R38, LTC1734, Q2 in the power source 4 charges the battery power source 44 automatically after the semiconductor storage apparatus is connected with the data processing system to ensure the normal power supply of the battery power source 44 under the supply mode of the battery power source.

The liquid crystal display component 54 uses a 128×32 dot matrix character type liquid crystal display, as shown in Fig. 13. The liquid crystal display component comprises a liquid crystal module (LCM) and a liquid crystal control module (MPU). The liquid crystal control module (MPU) receives the control signal from the microprocessor U3, and controls the information of the liquid crystal module (LCM) to display according to the control signal. Fig. 13 is a schematic circuit diagram of the connection circuit between the liquid crystal display (LCD) and the controller 1, wherein LDB0~LDB7 perform the data transmission, and connect with the corresponding LDB0~LDB7 of the microprocessor U3 in Fig. 8. LCS port connects with the LCS port of the U3 to receive the selected signal for the LCD from the microprocessor U3, and to make the LCD under the ready state. Meanwhile, REST as the reset port, LR/W as the read-write signal port, LD/I as the data command selection port, LE as the enabling operation port connect, respectively, with the corresponding REST, LR/W, LD/I, LE ports of the microprocessor U3 in Fig.8. The microprocessor U3 controls the information display of the liquid crystal display, and the feedback information from the displayed information. The type of the liquid crystal display screen may be character type, graphic type, customized type or any other type. The type of the liquid crystal may be the character type liquid crystal or the dot matrix liquid crystal.

When the semiconductor storage apparatus is not connected with the data processing system and the battery power source switch apparatus 43 is turned on, the semiconductor storage apparatus gets driven by the battery power source, and the controller module 1 is initialized, that is, runs the firmware in the microprocessor chip U3. The firmware detects and obtains the capacitor, free space and other information of the storage medium module 3, including the device information, user's information (user's name, code, etc.), the stored information content, the date and the time, etc. of the information prompt storage region 31, and converts the above-mentioned information into the special control command to transmit it to the liquid crystal display (LCD) module. The liquid crystal module displays the above-mentioned information. The above-mentioned information cannot be completely displayed at once due to the limitation of the size of the liquid crystal module (LCM) 52, and thus the dynamic display can be set or the manual control display is performed by the manual control component 53 (e. g. button, switch, etc.) of the semiconductor storage apparatus. Then, the user or possessor can know clearly of the above-mentioned information of the semiconductor storage apparatus. Certainly, the user can also cut off the battery power source switch 43 to switch off the power source, and turn off the display to save the battery power source.

When the semiconductor storage apparatus is connected with the data processing system, such as a computer, through USB interface, a fixed or removable storage disk occurs in the data processing system host, and can be used as a hard disk or a floppy disk.

When the semiconductor storage apparatus is connected with the USB interface of the host, the firmware of the processor chip U3 of the controller module 1 is activated, and initialized. The above-mentioned information is defined and displayed on the liquid crystal module (LCM) 52, and if necessary the read-write state information of the data (for instance, the read-write state information is "idle" or "waiting" here) is displayed thereon. In addition, the controller module 1 feedbacks the initialized information and the driver of the semiconductor storage apparatus to the host operation system through the USB interface, and the operation system performs the corresponding operation according to different feedback information or the property state.

After the initialization of the firmware, it detects first the manufacturer and the product type information of the storage medium chip of the semiconductor storage medium module, calculates the total capacity of the storage disk, and then reads out FAT table in the storage disk, calculates the used space and the free space, and then reads the contents in the prompt information storage region, including but not limited to the manufacturer information, the user's name, the user's code, the user's password, the product type, the product serial number, the product barcode, the description of the storage content, etc. Then, the acquired information is displayed on the liquid crystal module in accordance with the predetermined format. After the above-mentioned steps, the firmware in the controller module 1 enters the waiting state immediately to wait for the operation request from the host.

The data processing system sends the operation request of the universal interface to the storage apparatus through the driver, and the firmware in the apparatus processes the received standard operation request of the universal interface, and returns the result or state information to the data processing system. Thus, an information exchange path is established between the data processing system and the apparatus.

When the host operation system requests the read operation for the data, it will send the operation command to the driver; and the driver packages the read operation command via USB, and sends it to the firmware in the controller module 1 through the operation system. The firmware performs the read operation, that is, the firmware converts the logical address in the read command into the physical address in the semiconductor storage medium module 3, reads the data from the semiconductor storage medium according to the physical address and returns it to the data processing system. At the same time, it implements the information simultaneously prompt of the read operation state using LED indication lamp and the liquid crystal module 52, if necessary, to finish the read operation.

When the host operation system requests the write operation for the data, it will send the write operation command to the driver; and the driver packages the write operation command via USB, sends it to the firmware in the controller module 1 through the operation system. The firmware performs the read operation, that is, the firmware converts the logical address in the write command into the physical address in the semiconductor storage medium module 3, receives the data from the data processing system and writes the data into the semiconductor storage medium according to the physical address, and the driver returns the perform state information of the write operation to the operation system, and implements simultaneously the information prompt of the write operation state using LED indication lamp and the liquid crystal module 52, if necessary, to finish the write operation.

The firmware also supports the command request for the password verification of the prompt information storage region. The firmware receives the password that the host requests to be verified from the universal interface, and reads the password from the prompt information storage region, and then compares them. If they are the same, the password verification is passed; otherwise, it fails. Then, the firmware returns the verified result to the data processing system through the universal interface.

The firmware also supports the command request for setting up the password of the prompt information storage region. The firmware receives the password that the host requests to be set from the universal interface, and determines whether or not the password verification is passed. If passed, the new password is written into the prompt information storage region; otherwise, the modification is rejected. Then, the firmware returns the modified result to the data processing system through the universal interface.

The firmware also supports the command request for writing the prompt information storage region, and the firmware receives the information that the host requests to be written into the prompt information storage region, and then determines whether or not the password verification is passed. If passed, the new information will be written into the prompt information storage region; otherwise, the writing is rejected. Then, the firmware returns the result to the data processing system through the universal interface.

The firmware also supports the command request for reading the prompt information storage region, and the firmware determines whether or not the password verification is passed. If passed, it will read the data from the prompt information storage region and then send it into the host; otherwise, the reading is rejected. Then, the firmware returns the result to the data processing system through the universal interface.

The firmware can receive the button information from the manual control component. The prompt information of different pages is displayed on LCD component according to the information of different buttons. The button can be combined with the power source switch.

As shown in Fig. 4-1, the content displayed on the LCD of the present invention can be defined and modified by the software for setting the prompt information storage region in the data processing system. The prompt information storage region can be protected by the password. When being protected by the password, the content of the prompt information storage region needs to be verified before being set or modified. When the semiconductor storage apparatus is connected with the data processing system and the user passes legitimate verification, the user can control the software with the information prompt setting in the data processing system to read and modify the manufacturer information, the user's name, the user's code, the user's password, the product type, the product serial number, the product barcode, the description of the storage content of the apparatus, and the display mode, display language, operation mode of the liquid crystal display apparatus, and the like. The defined or modified information is sent to the firmware of the controller module 1 by the data processing system through the USB interface. The firmware receives the password that the information prompt storage region needs to be verified from the host, and reads the original password from the semiconductor storage medium. If the legitimate verification is passed, the defined or modified prompt information will be received from the data processing system, and the data write operation will be performed. The new prompt information is written into the prompt information storage region, and meanwhile the firmware of the controller module 1 informs the information prompt module 5 to update the displayed information, and returns the performance situation of the data update operation and/or displayed prompt information to the data processing system.

The flow chart of the software for setting the information prompt storage region is shown in Fig. 4-1. The software first receives the password inputted by the user, sends the password and the password verification request to the storage apparatus, and then reads the result of the password verification. If the verification fails several times, then the program ends. If the verification is passed, the content of the prompt information storage region can be read, modified, and set with a password. When the content of the prompt information storage region is read, the program sends a request command for reading the content of the prompt information region to the storage apparatus, and then receives and processes the information returned from the apparatus, and displays the read content on the screen.

When the content of the prompt information storage region is modified, the program receives the new prompt information content inputted by the user that needs to be set or modified, sends the written prompt information request and the new information prompt to be written to the storage apparatus, obtains the result processed by the apparatus, and displays the result on the screen. When the password of the prompt information storage region is set, the program receives the new password inputted by the user, sends the password setting request and the new password to be set to the apparatus, and obtains the result processed by the apparatus, and displays the result on the screen.

As shown in Fig. 4-2, the content displayed by the liquid crystal display of the present invention can be defined and modified by the software for setting the prompt information store region running in the data processing system. Without the password protection, the user can control the software for setting the prompt information storage region in the data processing system to read, and modify the manufacturer information, the user's name, the user's code, the product type, the product serial, the product bar code, the description of the storage content of the apparatus, and the display mode, the display language, the operation mode of the liquid crystal display apparatus, and the like. The defined or modified information is sent to the firmware of the controller module 1 by the data processing system through the USB interface. The firmware receives the defined or modified information prompt from the data processing system to write the data for writing the new prompt information into the prompt information storage region, and meanwhile the firmware of the controller module 1 informs the information prompt module 5 to update the displayed information, and returns the performance situation of the data update and/or the displayed prompt information to the data processing system.

The flow chart of the software for setting up the prompt information storage region is shown in Fig. 4-2. When reading the content of the prompt information storage region, the program sends the request command for reading the content of the prompt information region to the storage apparatus, and then receives and processes the information returned from the apparatus, and displays the read content on the screen. When the content of the prompt information storage region is modified, the program receives the new prompt information inputted by the user that needs to be set or modified, sends the write request for the prompt information and the new prompt information to be written to the storage apparatus, obtains the result processed by the apparatus, and displays the result on the screen.

The content stored in the prompt information region may be the character information and/or the pattern information; and the program can also convert the character information into the pattern information to store it in the prompt information storage region.

The most preferable embodiment of the present invention is to use a microprocessor with the USB, a LCD module with the function of self-control, a flash memory and a USB interface. Moreover, the LCD module may not have the function of self-control, and it is controlled by the microprocessor. The present invention may set the operation state of LED in addition to setting the LCD display module.

The present invention is further designed with the data protection and data retrieval functions such that the data stored in the storage apparatus cannot be damaged even when the user cuts off the connection between the storage apparatus and the data processing system host, or the power lost or the death of the computer occurs suddenly during the data is being written into the storage apparatus, and the damage of the data being written can be minimized. The way to realize the above function may be: 1. first searching a free new block of data in the semiconductor storage medium when the data is written into the semiconductor storage medium, such as flash memory, then writing the data to be written into the new block of data, and possibly recording the logical address corresponding to the new block of data in the new block of data if necessary. If the data in the original block of data is not completely covered, the uncovered data therein should be copied to the new block of data, and then the original block of data is cleared. During the above-mentioned writing operation, the different writing states are marked, if necessary, for the data retrieval. The data retrieval can perform at the next power-up. The way to achieve the above function can also be: 2. storing the original block of data where the covered data is present into the buffer of the storage medium first, clearing the original block of data if necessary, writing the new data into the original block of data, and then copying the uncovered data of the original block of data from the buffer to the original block of data. During the above writing progress, the different writing states are marked, if necessary, for the data retrieval.

When the storage medium is a flesh memory, the block of data is typically a block of the flash memory, sized 8KB (KB=KBYTE), 16KB, 32KB, 64KB, 128KB, 256KB, 512KB, 1024KB, etc. The content obtained by the aforesaid way is displayed on the screen. When the content of the prompt information storage region is modified, the program receives the new prompt information inputted by the user that needs to be set or modified, sends the write request for the prompt information and the new prompt information to be written to the storage apparatus, obtains the result processed by the apparatus, and displays the result on the screen.

The content stored in the prompt information region may be the character information and/or the pattern information; and the program can also convert the character information into the pattern information to store it in the prompt information storage region.

The most preferable embodiment of the present invention is to use a microprocessor with USB function, a LCD display module with the self-control function, flash memory and USB interface. Moreover, the LCD display module may not have the self-control function, and its control function is realized by the microprocessor. The present invention may set the operation state of a LED in addition to setting the LCD display module.

The present invention is further designed with the data protection and data retrieval functions such that the data stored in the storage apparatus cannot be damaged even when the user cuts off the connection between the storage apparatus and the data processing system host, or the power lost or the death of the computer occurs suddenly during the data is being written into the storage apparatus, and the damage of the data being written can be minimized. The way to realize the above function may be: 1. first searching a free new block of data in the semiconductor storage medium when the data is written into the semiconductor storage medium, such as flash memory, then writing the data to be written into the new block of data, and possibly recording the logical address corresponding to the new block of data in the new block of data if necessary. If the data in the original block of data is not completely covered, the uncovered data therein should be copied to the new block of data, and then the original block of data is cleared. During the above-mentioned writing operation, the different writing states are marked, if necessary, for the data retrieval. The data retrieval can perform at the next power-up. The way to achieve the above function can also be: 2. storing the original block of data where the covered data is present into the buffer of the storage medium first, clearing the original block of data if necessary, writing the new data into the original block of data, and then copying the uncovered data of the original block of data from the buffer to the original block of data. During the above writing progress, the different writing states are marked, if necessary, for the data retrieval.

When the storage medium is a flesh memory, the block of data is typically a block of a flash memory, sized 8KB (KB=KBYTE), 16KB, 32KB, 64KB, 128KB, 256KB, 512KB, 1024KB, etc. The aforesaid way can ensure that the user's data would not be completely damaged.

The data processing system referred to by the present invention comprises, but not limited to the computer, PDA, mobile telephone, MP3, digital camera, digital video, palm apparatus, etc.

## Claims

1. A method for realizing information prompt semiconductor storage, comprising the steps of:
A. setting up a semiconductor storage apparatus, which uses a semiconductor storage medium module (3) to control a controller module (1) and an interface module (2) of the semiconductor storage apparatus; **characterized by** the following steps of
B. providing an information prompt module (5) in the semiconductor storage apparatus;
C. the information prompt module (5) acquiring the information from the outside of the semiconductor storage apparatus and/or from the apparatus itself; and
D. the information prompt module (5) prompting the acquired information.

2. The method of claim 1, **characterized in that** the information prompt uses a liquid crystal display, an array of light emitting diodes, flat field emission display and/or organic-electroluminescence (OEL) to display the character and/or the pattern, and/or uses a speaker, buzzer and/or crystal acoustic generator as an acoustic prompt, and/or uses the vibrator as a vibration prompt.

3. The method of claim 1, **characterized in that** the information described in steps C or D refers to static information and/or dynamic information, wherein the static information refers to the user's information, device information and storage information or one of the aforesaid three kinds of information.

4. The method of claim 3, **characterized in that** the static information refers to manufacturer information, user's name, user's code, user's password, product type, product serial number, product barcode, description of the storage content, the total storage capacity of the semiconductor storage apparatus, the number of the storage media, the storage capacity of each storage medium, and/or manufacturer of the storage media; and the dynamic information refers to the read-write state of the device, the property of accessed file, used space, free space, write protection state, current property of working disk, temperature, humidity, index of noise, date, time, and/or index of air.

5. The method of claim 1, **characterized in that** a prompt information storage region is provided in the semiconductor storage apparatus, and the storage region is used to store the prompt information.

6. The method of claim 5, **characterized in that** the prompt information storage region can be provided in the semiconductor storage medium module (3), the information prompt module (5) and/or the controller module (1).

7. The method of claim 2, **characterized in that** the display of character and/or pattern can be the dynamic display and/or the static display.

8. The method of claim 1 or 2, **characterized by** further comprising a manual control component for setting up the information prompt, wherein the component is used to perform the manual control of the information prompt.

9. The method of claim 2, **characterized in that** a power source module (4) is provided in the semiconductor storage apparatus, wherein the power source module (4) obtains the power supply from outside and/or from a self-contained power source.

10. The method of claim 9, **characterized in that** a power source control switch is provided in a self-contained power source.

11. The method of claim 9, **characterized in that** the self-contained power source may be a PV cell, a primary cell and/or a rechargeable cell.

12. The method of claim 9, **characterized in that** the power source module (4) is provided with a conversion circuit to charge the self-contained rechargeable cell.

13. The method of claim 1, **characterized in that** the information content and/or the operation mode of the information prompt module (5) can be defined and modified by the software running in a data processing system host.

14. The method of claim 1, **characterized in that** the medium used by the storage medium is a flash memory, DRAM, EEPROM, SRAM, FRAM, MRAM and/or Millipede; the interface module (2) is a USB interface, IEEE1394 interface, Bluetooth interface, IrDA infrared interface, HomeRF interface, IEEE802.11a interface, IEEE802.11b interface, wire wide area/local area network interface, and/or wireless wide area/local area network interface.

15. A semiconductor storage apparatus for realizing information prompt, comprising a controller module (1), an interface module (2) and a semiconductor storage medium module (3) each connected with the module (1) electrically, **characterized by** further comprising an information prompt module (5), wherein the information prompt module (5) comprises at least a display component, an acoustic component and/or a vibration component; the respective modules can be present individually, and can also be combined to one or more modules.

16. The semiconductor storage apparatus of claim 15, **characterized in that** the information prompt module (5) comprises a control module (51) and a prompt module (52), wherein the control module (51) controls the operation of the prompt module (52), or the information prompt module (5) only comprises the prompt module (52).

17. The semiconductor storage apparatus of claim 15, **characterized in that** the information prompt module (5) is connected with the controller module (1), the interface module (2) and/or the semiconductor storage medium module (3) electrically.

18. The semiconductor storage apparatus of claim 15, **characterized in that** the display component is a liquid crystal display, light-emitting diode matrix display, field emission display and/or organic-electroluminescence (OEL) display; and the acoustic generating component is a speaker, buzzer and/or crystal acoustic generator.

19. The semiconductor storage apparatus of claim 15, **characterized by** further comprising a power source module (4), wherein the power source module (4) comprises a voltage adapter circuit and/ or self-contained power source.

20. The semiconductor storage apparatus of claim 19, **characterized in that** a power source control switch is provided in a self-contained power source.

21. The semiconductor storage apparatus of claim 19, **characterized in that** the self-contained power source may be a PV cell, a primary cell and/or a rechargeable cell.

22. The semiconductor storage apparatus of claim 19, **characterized in that** the power source module (4) is provided with a conversion circuit to charge the self-contained rechargeable cell.

23. The semiconductor storage apparatus of claim 15, **characterized by** further comprising a manual control component for setting the information prompt, wherein the component is used to perform the manual control of the information prompt.

24. The semiconductor storage apparatus of claim 15, **characterized by** further comprising a battery module (44) that is at least a battery cell (45) and contained in a cap (30) fit on a housing (20).

25. The semiconductor storage apparatus of claim 24, **characterized in that** the battery cell (45) is arranged into the cap (30) from a side inlet (31) with a side cover board (32) to cover and protect the inlet (31); one end of the cover (20) being provided with a USB or IEEE1394 interface (23), and one end of the cap (30) provided with an interface (33) connected with the interface (23), a switch (50) connected in serial with the circuit from the battery cell (45) to the interface (33) to cut off or turn on the power supply.
